# EUROPEAN PATENT APPLICATION

(11) **EP 1 871 082 A1**
(43) Date of publication of application: **26.12.2007**
(21) Application number: 06730546.6
(22) Date of filing: 23.03.2006
(51) Int. Cl.: H04M 1/247, H04M 1/00, H04Q 7/38

(54) **MOBILE COMMUNICATION TERMINAL, E-MAIL ARRIVAL INQUIRY METHOD, AND PROGRAM**

(30) Priority: 23.03.2005 JP 2005082873
(71) Applicant: NEC Corporation, Minato-ku Tokyo 108-8001 (JP)
(72) Inventor: HASEGAWA, Motoyoshi, , Tokyo, 1088001 (JP)
(74) Representative: Wenzel & Kalkoff
(86) International application number: PCT/JP2006/306598
(87) International publication number: WO 2006/101264

(57) **Abstract**

A portable mobile communication terminal having a mail function or a voice message service is provided with a function of automatically making inquiry per time interval set by a user, in addition to checking the presence/absence of center storage data upon power-on or upon termination of a communication. With this function, even if the frequency in use of the mobile communication terminal is low, it is possible to reliably check the presence/absence of mail or voice message storage data. Further, in order to notify a user to the effect that the automatic inquiry is being set, there is provided a function of displaying to that effect on a standby screen.

## Description

### Technical Field:

This invention relates to a mobile communication terminal, an arrival inquiry method, and a program therefor and, in particular, relates to a mobile communication terminal adapted to make inquiry to a service center about arrival of an electronic mail or a voice message, as well as an arrival inquiry method and a program therefor.

### Background Art:

Portable mobile communication terminals such as portable telephones have spread in recent years. Electronic mail (hereinafter simply referred to as mail) services, voice message services, and the like have also spread. When the mail service or the voice message service is used, there is conventionally a case where a real-time notification is difficult. Accordingly, the presence/absence of information is checked through communication with a network upon next communication, upon next power-on, or the like. Therefore, depending on the state of radio waves or the frequency in use, there is a case where an important mail or message cannot be obtained.

In view of this, referring to a prior art document (Japanese Unexamined Patent Application Publication (JP-A) No. 2002-218103), there is disclosed a technique of automatically making inquiry to a service center about a mail that has arrived at the service center. That is, this technique automatically makes inquiry to the service center about mail arrival at a predetermined timing set in advance by a user.

### Disclosure of the Invention:

### Problem to be Solved by the Invention:

According to the technique disclosed in the foregoing prior art document, by automatically making inquiry about a mail at the timing set by the user, it is possible to minimize a delay in delivery of the mail, thereby achieving an improvement in facility.

However, there is a possibility that the user may forget having set the automatic mail inquiry. Further, since communication cost is required for the inquiry, it is necessary to notify the user that the automatic mail inquiry is being set.

It is therefore an object of this invention to provide a portable communication terminal that can automatically make inquiry to a service center about a mail, a voice message, or the like and further can notify a user to that effect, as well as an arrival inquiry method and a program therefor.

### Means for Solving the Problem:

A portable communication terminal according to one mode of this invention is a portable communication terminal having at least one of a function of mail service and a function of voice message service and is characterized by comprising inquiry means for automatically making arrival inquiry about the foregoing service to a service center, and display means for displaying to the effect that the inquiry is automatically made.

An arrival inquiry method according to one mode of this invention is an arrival inquiry method in a portable communication terminal having at least one of a function of mail service and a function of voice message service and is characterized by comprising an inquiry step of automatically making arrival inquiry about the foregoing service to a service center, and a display step of displaying to the effect that the inquiry is automatically made.

A program according to one mode of this invention is a program for causing a computer to execute an arrival inquiry method in a portable communication terminal having at least one of a function of mail service and a function of voice message service and is characterized by comprising a step of automatically making arrival inquiry about the foregoing service to a service center, and a step of displaying to the effect that the inquiry is automatically made.

The foregoing portable mobile communication terminal has a function of automatically making inquiry at a timing or per time interval set by a user, in addition to checking the presence/absence of center storage data upon power-on or upon termination of a communication. With this function, even if the frequency in use of the mobile communication terminal is low, it is possible to reliably check the presence/absence of mail or voice message storage data.

Further, in order to notify a user to the effect that the automatic inquiry is being set, the foregoing portable mobile communication terminal has a function of displaying to that effect on a standby screen.

### Effect of the Invention:

According to this invention, in a portable mobile communication terminal having a mail function or a voice message service, it is possible to automatically make inquiry at a timing or per time interval set by a user, in addition to checking the presence/absence of center storage data upon power-on or upon termination of a communication.

Further, according to this invention, since there is provided a function of notifying a user, on a display screen, to the effect that the automatic inquiry is being set, even if the frequency in use of the portable mobile communication terminal is low, it is possible to reliably check the presence/absence of mail or voice message storage data.

Further, according to this invention, there is obtained an effect that it is also effective to a user's lapse of memory. Particularly, by displaying on a display screen, for example, on a standby screen, to the effect that the automatic inquiry is being set, a user can recognize that the communication cost is required for the inquiry.

### Brief Description of the Drawings:

Fig. 1 is a functional block diagram of a mobile communication terminal according to an embodiment of this invention.
Fig. 2 is an operation flowchart of the mobile communication terminal according to the embodiment of this invention.
Fig. 3 is a diagram showing an example of an inquiry interval setting screen.
Fig. 4 is a diagram showing an example of a mail inquiry interval setting screen.
Fig. 5 is a diagram showing an example of a standby screen while inquiry setting is on.
Fig. 6 is an operation flowchart of another embodiment of this invention.
Fig. 7 is a diagram showing an example of an inquiry schedule editing screen.
Fig. 8 is a diagram showing an example of a repetition setting screen.

### Best Mode for Carrying Out the Invention:

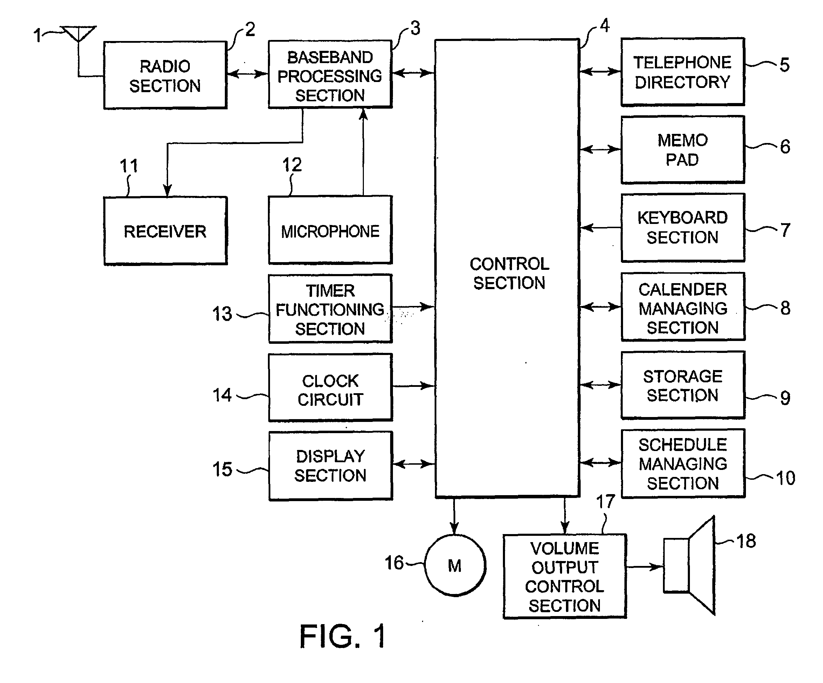

Hereinbelow, embodiments of this invention will be described in detail with reference to the drawings. Fig. 1 is a schematic structural diagram of a portable mobile communication terminal according to the embodiment of this invention. Referring to Fig. 1, the mobile communication terminal has an antenna (ANT) section 1 adapted to perform transmission and reception of radio signals. A baseband processing section 3 is connected to the antenna section 1 through a radio section 2. This radio section 2 and baseband processing section 3 perform modulation and demodulation of input and output radio signals. The baseband processing section 3 is connected to a control section 4. The control section 4 is a circuit that mainly controls functional operations.

The mobile communication terminal is provided with a power supply 19 that supplies electrical power to the terminal. Further, a receiver 11 adapted to function as a speech receiving section of the terminal is connected to the baseband processing section 3. Further, a microphone 12 adapted to function as a speech sending section of the terminal is connected to the baseband processing section 3.

A display section 15 is connected to the control section 4. The display section 15 is adapted to display telephone number, timepiece, inside/outside of service area, telephone directory, schedule, calendar, memo pad, current mode, and so on. A keyboard section 7 having a plurality of key buttons is connected to the control section 4. The keyboard section 7 has a function of recognizing a user's input operation and transmitting it to the control section 4. A volume output control section 17 is connected to the control section 4. The volume output control section 17 is a circuit for adjusting a volume output level of a sounder 18 under the control of the control section 4. The sounder 18 is a loudspeaker for producing an arrival sound.

A vibration section 16 is connected to the control section 4. The vibration section 16 is driven in a manner mode or the like when the output of the arrival sound from the sounder is prohibited. The vibration section 16 is a vibration motor for informing an arrival by vibration. The keyboard section 7 may be provided with a key dedicated for manner setting. In this mobile communication terminal, when setting the manner mode, a user can manually set the manner mode (no volume output from the sounder 18).

A telephone directory 5 adapted to function as a memory for storing names and telephone numbers is connected to the control section 4. Further, a calendar managing section 8 adapted to function as a memory storing a calendar function is connected to the control section 4. Further, a memo pad 6 adapted to function as a memory for storing memos or the like input from the keyboard 7 by the user is connected to the control section 4. Further, a clock circuit 14 is connected to the control section 4. The clock circuit 14 is a circuit for supplying clocks used for the operation of the control section 4.

A timer functioning section 13 is connected to the control section 4. The timer functioning section 13 manages current time information using the clocks of the clock circuit 14 and manages time information set for mail inquiry or voice message inquiry.

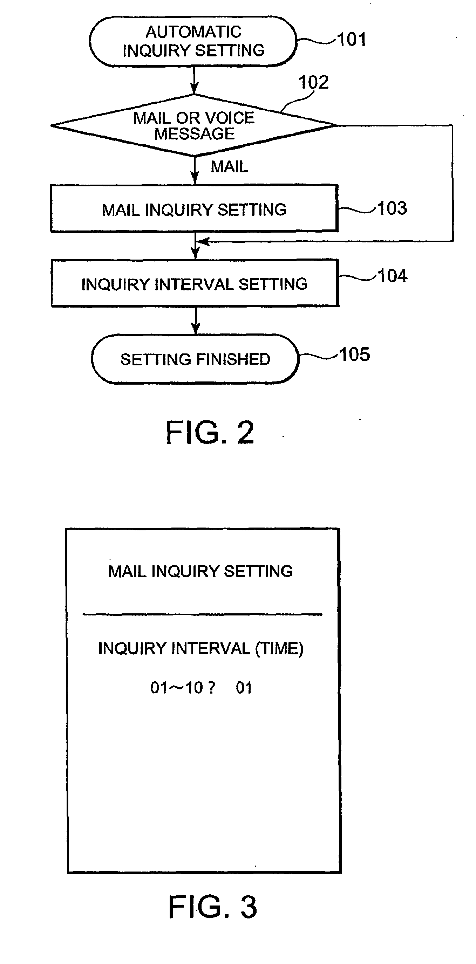

Hereinbelow, the embodiment of this invention will be described with reference to Fig. 2. Fig. 2 is a flowchart for explaining setting of automatic inquiry. In step S101, a judgment is made using the keyboard section 7 as to whether mail inquiry or voice message inquiry is set. In the case of the voice message inquiry, it proceeds to step 104 where an inquiry interval is set. Fig. 3 shows an example of an inquiry interval setting screen. The example of Fig. 3 is an example of setting from a one-hour interval to a ten-hour interval. In this setting, it is possible to set from the one-hour interval to the ten-hour interval.

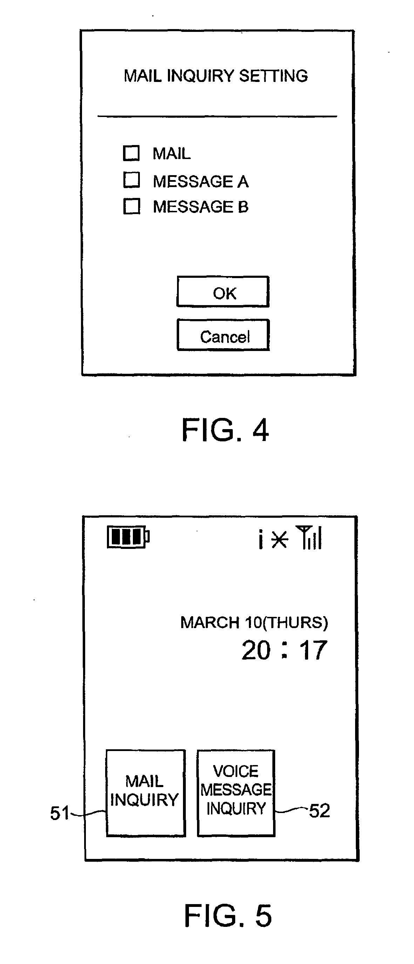

In the case of the mail inquiry, after performing an existing mail inquiry setting process (step 103), it proceeds to processing step 104 where an inquiry interval is set. Fig. 4 shows an existing mail inquiry setting screen. When a plurality of inquiry destinations exist, it is possible to select all of the inquiry destinations or select part of the inquiry destinations. When the mail inquiry setting has been completed, a display indicative of the completion is performed and a display indicative of the setting being on is performed on a standby screen.

Fig. 5 shows an example of a standby screen while the automatic inquiry setting is on. On the standby screen, there are displayed an icon 51 indicative of the automatic mail inquiry setting being on and an icon 52 indicative of the automatic voice message inquiry setting being on. With this display, a user visually understands that the setting is on.

Next, the operation at the time of the start of the inquiry will be described. After performing the setting according to the operation flow of Fig. 2, the set time is managed by the timer functioning section 13 so that the mail/voice message inquiry is carried out at the set time interval. By this inquiry method, the operation manually carried out conventionally can be automatically implemented as internal processing. For example, the conventionally required key input processing is automatically carried out by implementing a program of this invention. The operation after performing the inquiry is the same as that when the inquiry is carried out manually.

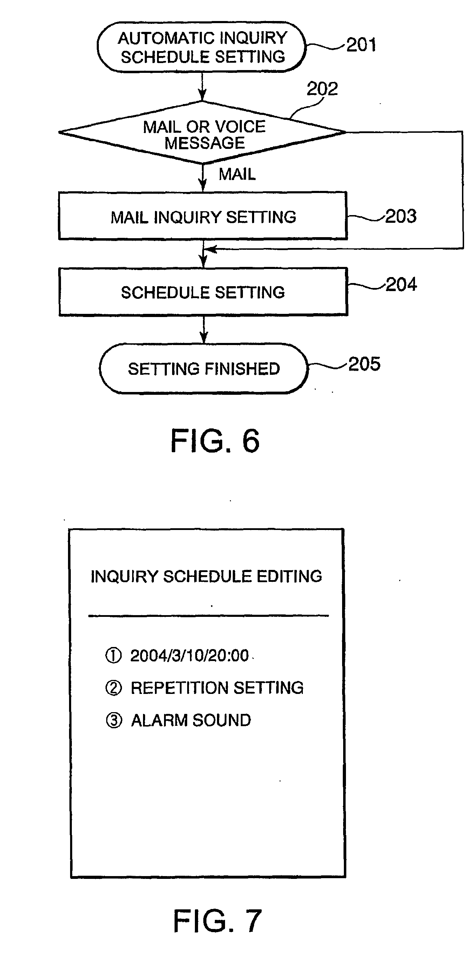

Next, another embodiment of this invention will be described using a flowchart of Fig. 6. Fig. 6 shows the flow of setting an inquiry time using an existing schedule function. Since the operation of steps 201 to 203 is the same as that of steps 101 to 103 of Fig. 2 in the foregoing embodiment, explanation thereof is omitted.

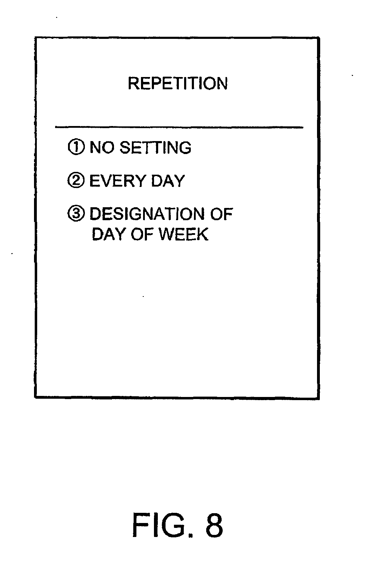

In the next schedule setting step 204, the existing schedule function is called out, thereby performing inquiry schedule editing. Fig. 7 shows an example of an inquiry schedule editing screen. Herein, a date and time, repetition, an alarm sound, and so on are set. Fig. 8 shows an example of a repetition setting screen. In the repetition setting, no repetition, repetition every day, designation of day of the week, or the like is set. By this setting, it is possible to make inquiry to a mail center, a voice message center, or the like at the date and time set in the schedule.

It is clearly possible to configure that the sequence of the operation in each of the foregoing embodiments of Figs. 2 and 6 is stored in advance in the form of a program in a recording medium such as a ROM, and a control section (CPU) being a computer reads and executes it.

## Claims

1. A portable communication terminal having at least one of a function of mail service and a function of voice message service, said portable communication terminal **characterized by** comprising
inquiry means for automatically making arrival inquiry about said service to a service center, and
display means for displaying to the effect that said inquiry is automatically made.

2. A portable communication terminal according to claim 1, **characterized in that** said display means displays, on a standby screen, to the effect that said inquiry is automatically made.

3. A portable communication terminal according to claim 1 or 2, **characterized in that** said display means displays, using an icon, to the effect that said inquiry is automatically made.

4. A portable communication terminal according to any one of claims 1 to 3, **characterized in that** said inquiry means makes said inquiry at a time interval set in advance.

5. An arrival inquiry method in a portable communication terminal having at least one of a function of mail service and a function of voice message service, said arrival inquiry method **characterized by** comprising
an inquiry step of automatically making arrival inquiry about said service to a service center, and
a display step of displaying to the effect that said inquiry is automatically made.

6. An arrival inquiry method according to claim 5, **characterized in that** said display step displays, on a standby screen, to the effect that said inquiry is automatically made.

7. An arrival inquiry method according to claim 5 or 6, **characterized in that** said display step displays, using an icon, to the effect that said inquiry is automatically made.

8. An arrival inquiry method according to any one of claims 5 to 7, **characterized in that** said inquiry step makes said inquiry at a time interval set in advance.

9. A program for causing a computer to execute an arrival inquiry method in a portable communication terminal having at least one of a function of mail service and a function of voice message service, said program **characterized by** comprising
a step of automatically making arrival inquiry about said service to a service center, and
a step of displaying to the effect that said inquiry is automatically made.
